# FASCICULE DE BREVET EUROPEEN

(11) **EP 3 445 641 B1**
(45) Date de publication et mention de la délivrance du brevet: **20.05.2020**
(21) Numéro de dépôt: 17716948.9
(22) Date de dépôt: 16.03.2017
(51) Int. Cl.: B62D 25/02, B62D 25/08, B62D 25/16, F16F 7/12

(54) **STRUCTURE D'AILE AVANT DE VÉHICULE AUTOMOBILE**
VORDERFLÜGELSTRUKTUR FÜR KRAFTFAHRZEUG
MOTOR VEHICLE FRONT WING STRUCTURE

(30) Priorité: 19.04.2016 FR 1653439
(43) Date de publication de la demande: 27.02.2019
(73) Titulaire: PSA Automobiles S.A., 78300 Poissy (FR)
(72) Inventeur: PLUCHAUD, Eric, 25260 MONTENOIS (FR)
(86) Numéro de dépôt international: PCT/FR2017/050611
(87) Numéro de publication internationale: WO 2017/182723

(56) Documents cités:
- EP-A1- 2 733 053
- EP-A1- 2 915 724
- DE-A1-102014 108 155
- JP-A- 2005 329 874
- JP-A- 2008 137 540
- JP-A- 2010 195 193

## Description

L'invention se rapporte au domaine du choc frontal pour un véhicule. Plus précisément, l'invention concerne une partie avant de structure de véhicule automobile avec une aile avant. L'invention a également trait à un véhicule automobile.

La carrosserie d'un véhicule automobile comporte des ailes avant qui couvrent les roues avant. Ces ailes sont fixées aux doublures d'ailes qui les soutiennent et les rigidifient. Un support intermédiaire est ajouté à chaque interface entre une aile et sa doublure afin de déporter la zone de l'aile qui est soutenue par rapport à la zone de la doublure supportant effectivement l'aile.

Un tel support intermédiaire doit être rigide pour permettre le bon maintien de l'aile. Or, la rigidité que présente le support intermédiaire nuit au comportement d'un véhicule lors d'un choc frontal. Il est donc nécessaire de l'adapter aux chocs pour préserver la sécurité passive d'un véhicule.

Le document FR 2 990 921 B1 divulgue une structure avant de véhicule automobile. La structure comporte une aile, une doublure d'aile, un renfort de la doublure d'aile, et un pied avant auquel sont fixés la doublure d'aile et son renfort. Un élément structurel complète la structure, et relie l'aile à sa doublure en s'étendant depuis le pied avant. L'élément structurel présente une forme allongée. Sa portion arrière est liée à la doublure, tandis que sa portion avant reçoit l'aile. La portion arrière présente une zone d'affaiblissement sur la majorité de la hauteur de l'élément ; cette zone favorisant un déplacement vertical en cas d'impact frontal. Cet élément permet de mieux maîtriser les déformations de la troisième voie à laquelle la doublure d'aile appartient. Toutefois, l'élément structurel tend à rigidifier la doublure d'aile là où il s'y fixe. Dès lors son potentiel d'absorption d'énergie est limité, et la sécurité passive du véhicule se dégrade. Qui plus est, la rigidité du maintien de l'aile reste réduite ; malgré le profil en L ; car la zone jointe à la doublure est éloignée de celle jointe à l'aile.

Le document EP 2733053 A1 décrit la partie avant d'une structure de véhicule selon le préambule de la revendication 1.

L'invention a pour objectif de résoudre au moins un des problèmes posés par l'art antérieur. Plus précisément, l'invention a pour objectif d'améliorer la sécurité d'un véhicule. L'invention a également pour objectif d'optimiser la rigidité de maintien d'une aile avant et les capacités d'absorption d'énergie d'une structure du véhicule.

L'invention a pour objet une partie avant de structure de véhicule, la partie avant comprenant : un support ; et une jonction comportant : une première zone fixée au support, une deuxième zone destinée à maintenir une aile avant de véhicule, et une première branche reliant la première zone à la deuxième zone ; le support étant adapté pour se déformer au niveau de la première zone lors d'un choc frontal contre le véhicule, la jonction comprenant en outre une deuxième branche reliant la première zone à la deuxième zone, et qui est écartée de la première branche à l'intérieur de la première zone.

Selon des modes particuliers de réalisation, la partie avant de structure de véhicule peut comprendre une ou plusieurs des caractéristiques suivantes, prises isolément ou selon toutes les combinaisons techniques possibles :
- La jonction comprend une amorce de déformation entre la première branche et la deuxième branche.
- La première branche et la deuxième branche sont écartées l'une de l'autre du côté de la deuxième zone.
- Les branches sont généralement perpendiculaires à la deuxième zone.
- La jonction comprend une zone d'affaiblissement entre la première branche et la deuxième branche, ladite zone d'affaiblissement comportant une cloison horizontale.
- Le support comprend une doublure d'aile avec un bord supérieur auquel la jonction est fixée via sa première zone.
- La première branche et/ou la deuxième branche s'étendent principalement verticalement.
- La deuxième zone forme un lien entre la première branche et la deuxième branche.
- La deuxième zone comprend des moyens de fixation de l'aile avant, éventuellement des orifices.
- La première branche et la deuxième branche sont généralement parallèles et/ou comprennent des allongements principaux perpendiculaires à la deuxième zone.
- L'échancrure est délimitée par un bord présentant un profil de rigidification.
- Le support comprend un renfort de la doublure d'aile, le renfort et la doublure d'aile délimitant une cavité s'étendant principalement longitudinalement, la jonction étant éventuellement au-dessus de ladite cavité.
- Le support est adapté pour absorber de l'énergie du choc contre le véhicule en se déformant le long de la première zone.
- La deuxième zone est à un niveau au-dessus du niveau de la première zone.
- La jonction comprend une troisième zone reliant la première zone à la deuxième zone, la jonction étant généralement plane dans la troisième zone.
- L'échancrure s'étend sur la majorité, ou sur 80% de la hauteur de la jonction, et/ou de la troisième zone.
- La zone d'affaiblissement est majoritairement formée par la cloison horizontale, et comporte éventuellement une cloison verticale.

L'invention a également pour objet une partie avant de structure de véhicule, la partie comprenant : un support ; une jonction comportant une zone de fixation au support, une zone de maintien d'une aile avant de véhicule; le support étant adapté pour se déformer au niveau de la zone de fixation lors d'un choc contre le véhicule, l'invention étant remarquable en ce que la jonction comprend une échancrure coupant la zone de fixation du support en deux parties écartées l'une de l'autre, afin de permettre la déformation du support. La zone de fixation peut correspondre à la première zone, et la zone de maintien peut correspondre à la deuxième zone. Lesdites parties écartées correspondent aux branches.

L'invention a également pour objet un véhicule automobile comprenant une partie avant de structure, remarquable en ce que la partie avant est conforme à l'invention, le véhicule comprenant en outre une aile avec un bord supérieur généralement horizontal qui est fixé à la deuxième zone.

Selon un mode particulier de l'invention, la jonction est contenue longitudinalement dans la moitié avant de l'aile.

De manière générale, les modes particuliers de chaque objet de l'invention sont également applicables aux autres objets de l'invention. Dans la mesure du possible, chaque objet de l'invention est combinable aux autres objets.

L'invention permet donc d'optimiser l'absorption d'énergie via la troisième voie à laquelle le support appartient, étant entendu que la première voie correspond essentiellement au berceau moteur, et la deuxième voie correspond essentiellement aux brancards avant.

L'invention permet de brider la rigidité de la jonction, et donc de ne pas perturber le comportement du support. Puisque la jonction est essentiellement courte longitudinalement, elle parvient à maintenir avec précision l'aile puisqu'elle limite le porte-à-faux longitudinal lors du fonctionnement normal du véhicule. Etant compacte longitudinalement, son contact avec son environnement se restreint pour devenir encore plus discrète en cas de choc frontal.

La jonction se comporte comme un fusible en cas de collision avant. Elle incline et vrille ses branches pour éviter de rigidifier l'aile et sa doublure. Par ailleurs, la jonction évite le déversement transversal de la doublure d'aile. Elle permet également à l'aile avant de se déchirer si besoin. Dès lors, le support joue pleinement son rôle d'absorbeur d'énergie pour des chocs prédéterminés. Le support parvient à se déformer en préservant le pied avant, et donc l'habitacle car les efforts restent repris par les parties latérales de la caisse. En corolaire, la porte avant située au voisinage peut être préservée. Ainsi en cas d'accident, l'invention permet de maîtriser les coûts des réparations.

L'invention permet par ailleurs un allégement. Certes, la masse de la jonction diminue via son échancrure, mais son épaisseur peut également être réduite. En effet, suite à son amincissement la jonction peut être raidie localement sans perturber son comportement de fusible. Par voie de conséquence, les éléments auxquels elle se fixe peuvent ; à leur tour ; être allégés grâce à l'amélioration de maintien qu'elle procure.

D'autres caractéristiques et avantages de la présente invention seront mieux compris à l'aide de la description donnée à titre d'exemple et en référence aux dessins parmi lesquels :
La figure 1 présente une partie avant de structure de véhicule selon l'invention.
La figure 2 illustre une coupe de la partie de structure suivant l'axe 2-2 tracé sur a figure 1.
La figure 3 montre le support et la jonction selon l'invention.

Dans la description qui va suivre, la direction longitudinale correspond à la direction principale de déplacement du véhicule, et l'avant à son sens principal de déplacement. La direction transversale est perpendiculaire à la direction transversale. Les directions évoquées ci-après renvoient au sens normal de montage dans le véhicule.

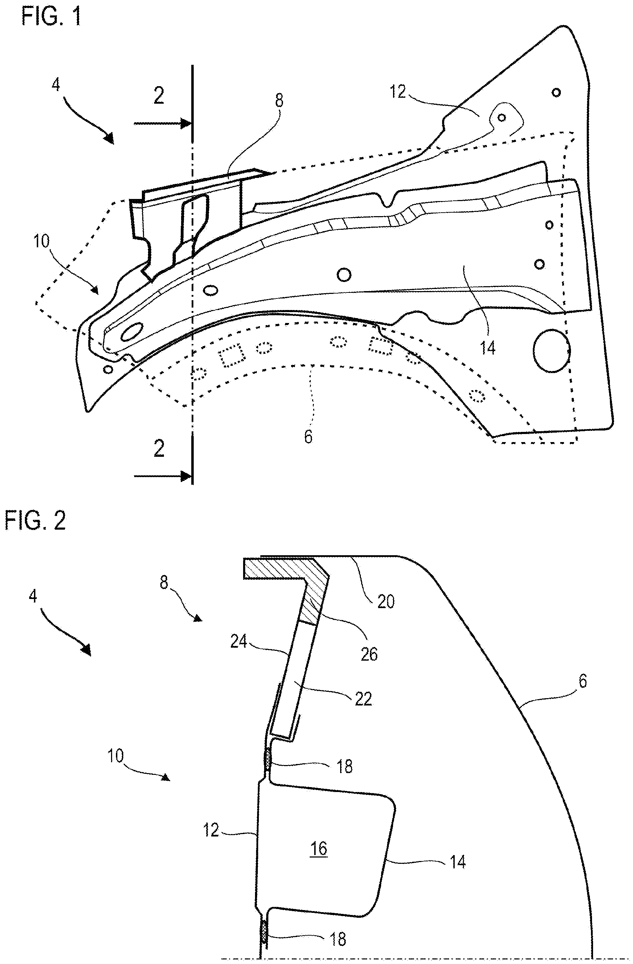

La figure 1 représente une partie avant 4 de structure de véhicule, notamment un véhicule automobile. La partie avant est observée transversalement depuis l'extérieur du véhicule. Elle correspond à la partie avant gauche. Bien entendu, l'invention s'applique également à la partie avant droite.

La structure peut être une caisse de véhicule automobile qui est formée par la réunion de tôles embouties, puis soudées ou collées entre elles afin de former l'ossature du véhicule. Cette ossature supporte les différents équipements du véhicule, dont les roues (non représentées), le moteur (non représenté). Elle relie le pare-chocs avant au pare-chocs arrière. L'ossature abrite l'habitacle recevant les passagers telle une coquille. La structure du véhicule joue un rôle actif lors d'un choc frontal contre le véhicule car elle est configurée pour se déformer de manière maîtrisée afin d'absorber progressivement l'énergie du choc tout en préservant l'habitacle.

La partie avant 4 comprend une aile avant 6 qui est ici tracée à l'aide d'un trait pointillé. Cette aile avant 6 appartient à la carrosserie du véhicule. Elle peut être réalisée à l'aide d'une tôle emboutie, par exemple en aluminium, en acier, ou encore en composite. Son bord inférieur est courbe de sorte à épouser le contour de la roue avant. L'aile avant 6 forme une peau visible de l'extérieur, son aspect comme son positionnement participent à la qualité perçue du véhicule. Dans le but de la positionner de manière optimale, elle est maintenue par une jonction 8 prenant appui sur un support 10 de la structure. La jonction 8 forme un lien mécanique, tel un support intermédiaire, reposant sur le support 10 de la structure.

La jonction 8 permet de décaler verticalement et transversalement un bord de fixation de l'aile avant 6 par rapport au support 10. Ceci peut être particulièrement accentué dans le cadre de véhicules utilitaires, ou certains véhicules dits de tourisme. Le décalage vertical et/ou le décalage transversal peuvent être supérieurs à 2cm, ou 5cm, ou 10cm. Dans l'optique de limiter l'influence de la jonction 8 sur les possibilités d'absorption d'énergie du support 10 lors d'un choc violent, cette jonction adopte une forme de lettre « U » inversé. Elle pourrait également montrer une forme de lettre « V » inversé, ou de « C » pivoté d'un quart de tour.

Le support 10 peut comprendre une doublure d'aile 12, laquelle supporte l'aile avant 6 et s'étend sur toute sa longueur. Elle peut être réalisée en une tôle plus épaisse que l'aile avant 6 afin de la renforcer. Elle peut s'étendre depuis le pied avant (non représenté) ou montant avant, de la structure du véhicule ; et regagner une traverse avant. Elle peut enjamber la roue avant associée. En complément, un renfort 14 peut être associé à la doublure d'aile 12 pour la rigidifier. Ce renfort 14 peut également toucher le pied avant de la structure. La jonction 8 peut être placée dans le tiers avant de la doublure d'aile 12 et/ou de l'aile avant 6. Cet emplacement permet de s'adapter à un écart grandissant vers l'avant entre leurs bords supérieurs respectifs.

La figure 2 présente une coupe de la partie avant 4 de structure de véhicule dessinée en figure 1. La coupe est exécutée selon l'axe 2-2 tracé en figure 1.

La doublure d'aile 12 et le renfort 14 peuvent être mis en forme de manière à former un longeron ou un caisson structurel. Ils peuvent ménager entre eux une cavité 16 s'étendant principalement longitudinalement, et qui reste éventuellement sous la jonction 8. Ils peuvent former la troisième voie d'absorption d'énergie du véhicule. Des points de fixation 18, tels des points de soudure ou de colle, lient la doublure d'aile 12 au le renfort 14. L'aile avant 6 recouvre l'ensemble. Elle comporte un bord supérieur 20, par exemple une bride de fixation, qui est maintenue par la jonction 8. Ce bord supérieur 20 est significativement à distance de celui du support 10.

La coupe traverse la jonction 8 au niveau d'une échancrure 22 qui la fend depuis le bas. L'échancrure 22 marque une découpe dans la jonction 8 afin de lui apporter une certaine souplesse. Sa largueur permet d'évider un dégagement entre des branches 24 (une seule étant visible) de la jonction 8. La coupe traverse également une zone d'affaiblissement 26, qui est représentée hachurée, et qui relie les branches 24.

La jonction 8 peut être plus épaisse que l'aile avant 6. Elle peut également être plus épaisse que la doublure d'aile 12 et/ou que le renfort 14. Toutefois, elle pourrait être de même épaisseur qu'eux. L'extrémité inférieure de chaque branche 24 est fixée au support 10, par exemple à la doublure d'aile 12 et/ou au renfort 14. Le renfort 10 peut recouvrir la branche 24, ou rester en dessous.

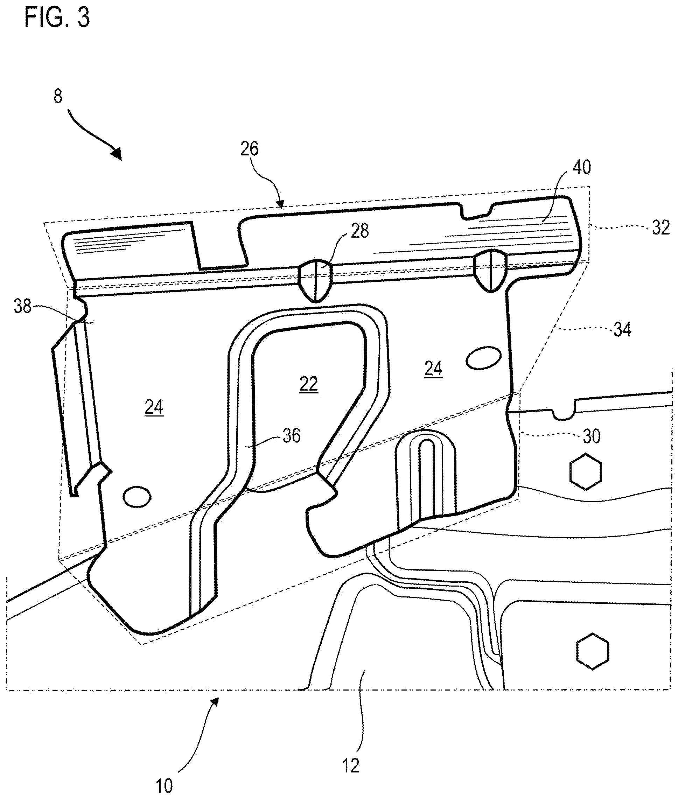

La figure 3 présente un agrandissement de la figure 2 dans lequel la jonction 8 apparait montée sur la doublure d'aile 12. Le renfort 14 n'est plus représenté par soucis de clarté.

Afin de faciliter sa déformation, la jonction 8 présente une amorce de déformation 28. Cette amorce peut être une nervure perpendiculaire à son arrête. Elle pourrait alternativement être un orifice. L'amorce de déformation 28 peut être disposée entre les branches 24, par exemple dans la zone d'affaiblissement 26. Elle engendre une faiblesse lors de la compression longitudinale de la jonction 8. Elle peut favoriser l'écartement et/ou le rapprochement des branches 24, soit l'agrandissement et/ou le rétrécissement de l'échancrure 22.

La jonction 8 comprend une première zone 30 fixée à la doublure d'aile 12, une deuxième zone 32 recevant l'aile avant, et une zone de jonction 34 reliant la première zone 30 à la deuxième zone 32. La zone de jonction 34 peut relier la doublure d'aile 12 à l'aile avant. Les branches 24 traversent la zone de jonction 34, si bien qu'elles relient physiquement la première zone 30 à la deuxième zone 32. Les branches 24 sont essentiellement allongées, leurs allongements respectifs peuvent être parallèles, et généralement perpendiculaires à l'allongement principal de la deuxième zone 32. La zone d'affaiblissement 26 peut être à cheval sur la deuxième et la troisième zone.

Les branches 24 sont écartées l'une de l'autre là où elles touchent le support 10, cet écart étant permis grâce à l'échancrure 22 qui offre un espace pour libérer le mouvement du support 10 dans la première zone 30. Dès lors, le comportement du support 10 devient moins contraint, et son comportement d'absorbeur d'énergie est mieux maîtrisé. Pour malgré tout optimiser la fonction de maintien des branches 24, celles-ci peuvent inclure des bords en cornière. Une marche 36 profilée peut délimiter l'échancrure 22.

L'échancrure 22 peut traverser la majorité de la troisième zone 34 en plus de couper la première zone 30. Elle peut rejoindre la zone d'affaiblissement 26. Sa hauteur peut représenter 70% de la hauteur de la jonction 8.

La jonction 8 peut être formée par une cloison verticale 38 et par une cloison horizontale 40. Ces cloisons (38 ; 40) peuvent être généralement perpendiculaires. Leur inclinaison peut être adaptée pour se conformer aux brides et aux bords de l'aile avant et du support 10. Les branches 24 peuvent être formées grâce à la cloison verticale 38. Les cloisons (38 ; 40) peuvent également former la zone d'affaiblissement 26. La cloison horizontale 40 peut former l'essentiel de cette zone d'affaiblissement 26, si bien qu'en cas de déformation la jonction 8 plie au niveau de cette cloison horizontale 40. La zone d'affaiblissement 26 peut être une zone charnière qui plie en cas de choc. Elle peut également être une zone fusible qui rompt lors du choc.

## Revendications

1. Partie avant (4) de structure de véhicule, la partie avant (4) comprenant :
un support (10) ; et
une jonction (8) comportant :
une première zone (30) fixée au support (10),
une deuxième zone (32) destinée à maintenir une aile avant (6) de véhicule, et
une première branche (24) reliant la première zone (30) à la deuxième zone (32) ;
le support (10) étant adapté pour se déformer au niveau de la première zone (30) lors d'un choc frontal contre le véhicule ladite jonction (8) comprenant en outre une deuxième branche (24) reliant la première zone (30) à la deuxième zone (32), et qui est écartée de la première branche (24) à l'intérieur de la première zone (30), ladite partie avant (4) étant **caractérisée en ce que** la jonction (8) comprend une échancrure (22) séparant les branches et s'étendant au-delà du support (10).

2. Partie avant (4) selon la revendication 1, **caractérisée en ce que** la jonction (8) comprend une amorce de déformation (28) entre la première branche (24) et la deuxième branche (24).

3. Partie avant (4) selon l'une des revendications 1 à 2, **caractérisée en ce que** la première branche (24) et la deuxième branche (24) sont écartées l'une de l'autre du côté de la deuxième zone (32).

4. Partie avant (4) selon l'une des revendications 1 à 3, **caractérisée en ce que** les branches (24) sont généralement perpendiculaires à la deuxième zone (32).

5. Partie avant (4) selon l'une des revendications 1 à 4, **caractérisée en ce que** la jonction (8) comprend une zone d'affaiblissement (26) entre la première branche (24) et la deuxième branche (24), ladite zone d'affaiblissement (26) comportant une cloison horizontale (40).

6. Partie avant (4) selon l'une des revendications 1 à 5, **caractérisée en ce que** le support (10) comprend une doublure d'aile (12) avec un bord supérieur auquel la jonction (8) est fixée via sa première zone (30).

7. Partie avant (4) selon l'une des revendications 1 à 6, **caractérisée en ce que** la première branche (24) et/ou la deuxième branche (24) s'étendent principalement verticalement.

8. Véhicule automobile comprenant une partie avant (4) de structure, **caractérisé en ce que** la partie avant (4) est conforme à l'une des revendications 1 à 7, le véhicule comprenant en outre une aile avant (6) avec un bord supérieur (20) généralement horizontal qui est fixé à la deuxième zone (32).

9. Véhicule selon la revendication 1, **caractérisé en ce que** la jonction (8) est contenue longitudinalement dans la moitié avant de l'aile avant (6).

## Patentansprüche

1. Vorderteil (4) einer Fahrzeugstruktur, wobei der Vorderteil (4) Folgendes umfasst:
einen Träger (10); und
eine Verbindung (8), bestehend aus:
einem ersten Bereich (30), der an dem Träger (10) befestigt ist, einem zweiten Bereich (32), der zum Halten eines vorderen Kotflügels (6) eines Fahrzeugs vorgesehen ist,
einer ersten Abzweigung (24), die den ersten Bereich (30) mit dem zweiten Bereich (32) verbindet; wobei der Träger (10) so angepasst ist, dass er sich im Falle eines Frontalaufpralls gegen das Fahrzeug im Bereich des ersten Bereichs (30) verformt; wobei die Verbindung (8) weiter eine zweite Abzweigung (24) umfasst, die den ersten Bereich (30) mit dem zweiten Bereich (32) verbindet und die von der ersten Abzweigung (24) im Inneren des ersten Bereichs (30) beabstandet ist, wobei der Vorderteil (4) **dadurch gekennzeichnet ist, dass** die Verbindung (8) eine Aussparung (22) umfasst, welche die Abzweigungen trennt und sich über den Träger (10) hinaus erstreckt.

2. Vorderteil (4) nach Anspruch 1, **dadurch gekennzeichnet, dass** die Verbindung (8) einen Verformungsbeginn (28) zwischen der ersten Abzweigung (24) und der zweiten Abzweigung (24) umfasst.

3. Vorderteil (4) nach einem der Ansprüche 1 bis 2, **dadurch gekennzeichnet, dass** die erste Abzweigung (24) und die zweite Abzweigung (24) auf der Seite des zweiten Bereichs (32) voneinander beabstandet sind.

4. Vorderteil (4) nach einem der Ansprüche 1 bis 3, **dadurch gekennzeichnet, dass** die Abzweigungen (24) im Allgemeinen senkrecht zum zweiten Bereich (32) sind.

5. Vorderteil (4) nach einem der Ansprüche 1 bis 4, **dadurch gekennzeichnet, dass** die Verbindung (8) zwischen der ersten Abzweigung (24) und der zweiten Abzweigung (24) einen Schwächungsbereich (26) aufweist, wobei der Schwächungsbereich (26) eine horizontale Wand (40) aufweist.

6. Vorderteil (4) nach einem der Ansprüche 1 bis 5, **dadurch gekennzeichnet, dass** der Träger (10) eine Flügelverkleidung (12) mit einem oberen Rand umfasst, an dem die Verbindung (8) mit ihrem ersten Bereich (30) befestigt ist.

7. Vorderteil (4) nach einem der Ansprüche 1 bis 6, **dadurch gekennzeichnet, dass** sich die erste Abzweigung (24) und/oder die zweite Abzweigung (24) im Wesentlichen vertikal erstrecken.

8. Kraftfahrzeug, das ein Strukturvorderteil (4) umfasst, **dadurch gekennzeichnet, dass** das Vorderteil (4) einem der Ansprüche 1 bis 7 entspricht, wobei das Fahrzeug weiter einen vorderen Kotflügel (6) mit einem im Allgemeinen horizontalen oberen Rand (20) umfasst, der an dem zweiten Bereich (32) befestigt ist.

9. Fahrzeug nach Anspruch 1, **dadurch gekennzeichnet, dass** die Verbindung (8) in Längsrichtung in der vorderen Hälfte des vorderen Kotflügels (6) enthalten ist.

## Claims

1. Vehicle structure front portion (4), the front portion (4) comprising:
a support (10); and
a junction (8) comprising:
a first zone (30) fixed to the support (10),
a second zone (32) intended to maintain a vehicle front wing (6),
and
a first branch (24) connecting the first zone (30) to the second zone (32);
the support (10) being adapted to be deformed at the level of the first zone (30) at the time of a front impact against the vehicle; said junction (8) further comprising a second branch (24) connecting the first zone (30) to the second zone (32), and which is offset from the first branch (24) inside the first zone (30), said front portion (4) being **characterised in that** the junction (8) comprises a scallop (22) separating the branches and extending beyond the support (10).

2. Front portion (4) according to claim 1, **characterised in that** the junction (8) comprises a deformation starter (28) between the first branch (24) and the second branch (24).

3. Front portion (4) according to one of claims 1 to 2, **characterised in that** the first branch (24) and the second branch (24) are offset from one another on the side of the second zone (32).

4. Front portion (4) according to one of claims 1 to 3, **characterised in that** the branches (24) are generally perpendicular to the second zone (32).

5. Front portion (4) according to one of claims 1 to 4, **characterised in that** the junction (8) comprises a weakening zone (26) between the first branch (24) and the second branch (24), said weakening zone (26) comprising a horizontal partition wall (40).

6. Front portion (4) according to one of claims 1 to 5, **characterised in that** the support (10) comprises a wing lining (12) with an upper edge to which the junction (8) is fixed via the first zone (30) thereof.

7. Front portion (4) according to one of claims 1 to 6, **characterised in that** the first branch (24) and/or the second branch (24) extend mainly vertically.

8. Motor vehicle comprising a structural front portion (4), **characterised in that** the front portion (4) is according to one of claims 1 to 7, the vehicle further comprising a front wing (6) with a generally horizontal upper edge (20) which is fixed to the second zone (32).

9. Vehicle according to claim 1, **characterised in that** the junction (8) is contained longitudinally in the front half of the front wing (6).
